# EUROPÄISCHE PATENTSCHRIFT

(11) **EP 3 084 778 B1**
(45) Veröffentlichungstag und Bekanntmachung des Hinweises auf die Patenterteilung: **07.02.2018**
(21) Anmeldenummer: 14825144.0
(22) Anmeldetag: 19.12.2014
(51) Int. Cl.: H01B 3/46, C08K 3/36, C08L 83/04, H01B 7/02, H01B 7/38, H01B 9/02

(54) **KABEL UND VERFAHREN ZU DESSEN HERSTELLUNG**
CABLE AND METHOD FOR PRODUCING THE SAME
CÂBLE ET PROCÉDÉ DE SA PRODUCTION

(30) Priorität: 19.12.2013 DE 102013226790
(43) Veröffentlichungstag der Anmeldung: 26.10.2016
(73) Patentinhaber: LEONI Kabel GmbH, 90402 Nürnberg (DE)
(72) Erfinder: DREINER, Michael, 51688 Wipperfürth (DE); ECK, Christian, 51688 Wipperfürth (DE); FREYTH, Winfried, 58332 Schwelm (DE)
(74) Vertreter: FDST Patentanwälte
(86) Internationale Anmeldenummer: PCT/EP2014/078781
(87) Internationale Veröffentlichungsnummer: WO 2015/091971

(56) Entgegenhaltungen:
- EP-A1- 2 711 934
- WO-A1-2013/079201
- DE-A1- 3 722 755
- DE-A1- 19 717 645
- GB-A- 870 583
- NAMITHA L K ET AL: "Effect of micro- and nano-fillers on the properties of silicone rubber-alumina flexible microwave substrate", CERAMICS INTERNATIONAL, ELSEVIER, AMSTERDAM, NL, Bd. 39, Nr. 6, 26. Februar 2013 (2013-02-26), Seiten 7077-7087, XP028539006, ISSN: 0272-8842, DOI: 10.1016/J.CERAMINT.2013.02.047

## Beschreibung

Die Erfindung betriff ein Kabel mit einem elektrischen Leiter, mit einem diesen umgebenden Silikonmantel und mit einer Trennlage, die zwischen dem Leiter und dem Mantel angeordnet ist. Desweiteren betrifft die Erfindung ein Verfahren zur Herstellung eines solchen Kabels.

Ein Kabel umfasst üblicherweise zumindest einen Leiter, der von einem Mantel insbesondere zum Schutz oder zur Isolierung umgeben ist. Der Leiter ist typischerweise ein Draht oder eine Litze aus Metall, wohingegen der Mantel häufig aus einem Kunststoff gefertigt ist. Beim Konfektionieren des Kabels wird der Mantel abschnittsweise wieder entfernt, wobei der Aufwand hierbei maßgeblich von der Haftung des Mantels am Leiter abhängig ist und somit insbesondere von der gewählten Materialkombinationen.

Besonders geeignete Materialien zur Herstellung eines Mantels für ein Kabel sind Silikone, insbesondere aufgrund derer chemischen sowie physikalischen Eigenschaften. Insbesondere bei einem solchen Silikonmantel ergibt sich jedoch üblicherweise eine besonders starke Haftung am oder klebende Verbindung mit dem umhüllten Leiter. Dieser Effekt ist besonders ausgeprägt bei Leiter aus Aluminium. Bei der anschließenden Weiterverarbeitung, insbesondere beim Konfektionieren und Abisolieren, wird durch die starke Haftung ein Abtrennen des Silikonmantels deutlich erschwert, da hierbei üblicherweise Silikonreste an dem Leiter verbleiben. Solche stören dann insbesondere einen möglicherweise nachfolgenden Crimp- oder Schweißprozess.

Um dies zu vermeiden kann beim Herstellen des Kabels auf den Leiter eine Trennlage aus Papier, PET-Vlies, PET-Folie, PTFE-Folie oder Folien aus ähnlichen Materialien aufgebracht werden. Im fertigen Kabel bildet die Trennlage dann eine Trennschicht, die räumlich zwischen dem Leiter und dem Mantel derart angeordnet ist, dass ein direktes Aneinanderliegen der beiden Materialien und somit ein Verbinden oder Aneinanderhaften derselben verhindert wird. Allerdings bleiben auch hierbei nach dem Abisolieren häufig Teile der Folien stehen und müssen anschließend aufwändig, beispielsweise händisch entfernt werden.

Die Verwendung von Silikon als Werkstoff für ein Kabel ist auch im Zusammenhang mit anderen technischen Funktionen bekannt.

So ist aus der GB 870583 A die Verwendung einer halbleitfähigen Silikonlage zu entnehmen. Hierzu sind der Silikonlage leitfähige Partikel beigegeben.

Aus der DE 197 17 645 A1 ist ein Brandschutzkabel mit einer Trennschicht auf Basis eines siliziumorganischen Polymers zu entnehmen. In die Trennschicht sind zwei unterschiedliche Füllstoffe mit unterschiedlichen Schmelztemperaturen eingebracht.

Ausgehend hiervon liegt der Erfindung die Aufgabe zugrunde, ein Kabel anzugeben, bei dem ein Konfektionieren und Abisolieren auf vereinfachte Weise möglich ist. Dabei soll der Leiter des Kabels möglichst rückstandsfrei abisolierbar sein. Die Notwendigkeit einer zusätzlichen Reinigung des abisolierten Leiters von Rückständen soll vermieden werden. Weiterhin soll ein Verfahren zur Herstellung eines entsprechenden Kabels angegeben werden.

Zur Lösung dieses Problems ist erfindungsgemäß ein Kabel mit den Merkmalen des Anspruchs 1 ausgebildet. Die Aufgabe wird weiterhin erfindungsgemäß gelöst durch ein Verfahren zur Herstellung eines derartigen Kabels mit den Merkmalen des Anspruchs 11. Vorteilhafte Ausgestaltungen, Weiterbildungen und Varianten sind Gegenstand der Unteransprüche.

Danach ist erfindungsgemäß vorgesehen, dass bei dem Kabel zwischen dem Silikonmantel und dem Leiter eine Trennlage angeordnet ist, die aus einem Silikon-Werkstoff gefertigt ist, welcher im Vergleich mit dem Material des Silikonmantels eine geringere Haftung zum elektrischen Leiter aufweist. Mit anderen Worten: der Silikonmantel haftet im herkömmlichen Fall, das heißt insbesondere ohne die ge nannte Trennlage stärker am Leiter, als die Trennlage im hier beschriebenen Kabel.

Die mit der Erfindung erzielten Vorteile bestehen insbesondere darin, dass anstelle einer Trennlage aus üblicherweise verwendeten Materialien eine dem Silikonmantel ähnliche, nicht auf dem Leiter haftende Trennlage aufgebracht ist. Durch diese Materialwahl sind der Silikonmantel und die Trennlage insbesondere zu einem gemeinsamen Kabelmantel miteinander verbunden, dessen Haftung am Leiter im Vergleich zum bloßen Silikonmantel deutlich reduziert oder sogar vermieden ist. Vorteilhaft wird die Trennlage zudem beim Abisolieren oder Abmanteln automatisch gemeinsam mit dem Silikonmantel abgezogen. Die Verbindung zwischen Trennlage und Silikonmantel ergibt sich insbesondere aus der Tatsache, dass diese jeweils aus einem Silikon oder silikonähnlichen Material gefertigt sind und daher besonders gut aneinander haften. Sowohl der Silikonmantel als auch der Silikon-Werkstoff der Trennlage bestehen zumindest hauptsächlich aus einem Silikon, insbesondere ein Silikonelastomer. Außenmantel und Trennschicht sind jedoch verschieden zueinander. Insbesondere haftet die Trennlage deutlich schlechter am Leiter als das Material des Außenmantels. Die Trennlage bildet somit vorteilhaft eine Schicht, die zum Leiter hin, das heißt nach innen besonders schlecht haftet und zum Silikonmantel hin, das heißt nach außen besonders stark. Dadurch ist es beim Konfektionieren oder Abisolieren möglich, den Leiter rückstandslos freizulegen. Somit entfällt insbesondere ein ansonsten zusätzlicher Reinigungsschritt, bei dem der abisolierte Teil des Leiters von verbleibenden Resten der Trennlage und/oder des Silikonmantels gereinigt wird.

Eine besonders vorteilhafte Verbindung von Trennlage und Silikonmantel lässt sich in einer bevorzugten Ausgestaltung dadurch erzielen, dass die Trennlage mit dem Silikonmantel stoffschlüssig verbunden ist. Eine solche stoffschlüssige Verbindung ist insbesondere aufgrund der speziellen Materialwahl besonders einfach realisierbar. Da sowohl der Silikonmantel als auch die Trennlage aus einem Silikon, das heißt insbesondere auch einem silikonähnlichen Material, gefertigt sind, ist es insbesondere auch bei der Herstellung möglich, diese beiden Teile des Kabels besonders fest miteinander zu verbinden. Die Trennlage und der Silikonman tel sind dann zweckmäßigerweise unlösbar, das heißt nachträglich untrennbar miteinander verbunden oder weisen zumindest eine starke Haftung zueinander auf, so dass bei einem Abisolieren des Silikonmantels die Trennlage zuverlässig mit entfernt wird. Unter hoher Haftung wird dabei hier insbesondere eine stärkere Haftung als diejenige zwischen Trennlage und Leiter verstanden. Aufgrund dieser geringeren oder sogar fehlenden Haftung zum Leiter verbleiben entsprechend auch keine Rückstände auf diesem.

Unter einem Silikon-Werkstoff wird insbesondere ein Werkstoff verstanden, der auf einem Silikon basiert, silikonähnlich ist oder direkt ein Silikon ist. Insbesondere ist es möglich, als Ausgangsmaterial für den Silikon-Werkstoff das gleiche Silikon zu verwenden, wie für den Silikonmantel. Alternativ ist es möglich, zwei unterschiedliche Silikone zu verwenden. Dabei werden für den Silikonmantel sowie insbesondere auch für die Trennlage vorzugsweise solche Silikone verwendet, die bei Raumtemperatur im festen Aggregatzustand vorliegen. Der Silikon-Werkstoff weist zweckdienlicherweise eine im Vergleich zu dem Material des Silikonmantels höhere Dichte auf. Diese liegt bevorzugt im Bereich von etwa 1,5 bis 1,8g/cm³. Im Vergleich zu dem Material des Silikonmantels, der beispielsweise aus herkömmlichem Silikon gefertigt ist, welches eine Dichte im Bereich von typischerweise 1,1 bis 1,2 g/cm³ aufweist, liegt daher allgemein die Dichte der Trennlage um ein Viertel bis etwa die Hälfte höher als die Dichte des Silikonmantels. Durch die höhere Dichte wird insbesondere auch eine höhere Härte erreicht, die die geringe Haftung zum Leiter hin begünstigt.

Bei dem Silikon-Werkstoff handelt es sich um einen mit zumindest einem Füllstoff versehenen Werkstoff, insbesondere um mit Füllstoff angereichertes Silikon. Der Füllstoff ist daher im Silikon eingebettet, insbesondere homogen verteilt im Volumen. Das Silikon bildet daher quasi eine Matrix oder Trägerstoff, in dem der Füllstoff, also die einzelnen Partikel, eingebettet sind. Ein Beimischen oder Zusetzen eines Füllstoffes ermöglicht insbesondere ein geeignetes Einstellen der Dichte des Silikon-Werkstoffes für die Trennlage. Zudem ist es mittels des Füllstoffes möglich, das Haft- und Verbindungsverhalten der Trennlage bezüglich sowohl des Silikonmantels wie auch des Leiters vorteil haft einzustellen. Zweckmäßigerweise erfolgt entsprechend eine Beimischung des Füllstoffes derart, dass gegenüber dem Fall ohne Füllstoff die Haftung gegenüber dem Silikonmantel erhöht oder gegenüber dem Leiter verringert wird, bevorzugterweise sogar beides.

Bei dem Füllstoff handelt es sichum einen mineralischen (Festkörper-)Stoff, insbesondere um einen pulverförmigen Stoff. Ein solcher trägt insbesondere vorteilhaft zur Verringerung der Haftung des Silikon-Werkstoffes am Leiter des Kabels bei, das heißt durch den Füllstoff wird allgemein die Haftung zum Leiter deutlich reduziert. Gleichzeitig wird durch die Verwendung des Silikon-Werkstoffes quasi als Trägerstoff für den Füllstoff in vorteilhafter Weise auch eine unmittelbare stoffschlüssige Anbindung an den Silikonmantel sichergestellt, das heißt insbesondere eine Verbindung mit dem Silikonmantel. Der Füllstoff weist vorzugsweise eine Partikelgröße im µm-Bereich auf, beispielsweise im Bereich von einigen 10 µm.

Als Füllstoff wird vorzugsweise ein Siliziumdioxid oder eine Kieselsäure verwendet. Bei solchen Füllstoffen handelt es sich um mineralische Stoffe auf Siliziumbasis, die sich daher besonders gut dem Silikon-Werkstoff beimischen lassen. Vorzugsweise wird eine pyrogene Kieselsäure eingesetzt, wie sie beispielsweise unter dem Handelsnamen AEROSIL der Evonik Industries bekannt ist, eingesetzt.

Der Anteil des Füllstoffes innerhalb des Silikon-Werkstoffes ergibt sich insbesondere aus der im Vergleich zu reinem Silikon erhöhten Dichte. Der Anteil des Füllstoffes liegt vorzugsweise bei wenigstens 10 Gew.% und höchstens 70. Gew.%. In einer geeigneten Weiterbildung beträgt der Anteil wenigstens 30 Gew.% und höchstens 60 Gew.%.

Weiterhin werden dabei als Silikon für den Silikonmantel einerseits und für den Trägerstoff für den Füllstoff andererseits das gleiche Silikon, insbesondere ein Silikonelastomer verwendet. Der Sillikonmantel sowie die Trennlage unterscheiden sich daher nur durch die Füllstoffe.

Als Silikon-Material für den Silikon-Werkstoff und / oder für den Silikonmantel ist vorzugsweise ein heißvulkanisierendes Silikon auf Basis von Diorgano(poly)siloxanen verwendet. Bevorzugt besteht daher der Silikonmantel aus diesem heißvulkanisierten Silikon und der Silikon-Werkstoff besteht bevorzugt ebenfalls aus einer Silikon-Matrix aus dem insbesondere gleichen heißvulkanisierten Silikon, in die die Füllstoffe eingebettet sind.

Diese Erfindung bezieht sich auf heißvulkanisierenden Siliconmassen auf der Basis von Diorgano(poly)siloxanen, welche im allgemeinen HTV (high temperature vulcanizing)-Silikonmassen genannt werden. Bei diese Silikonen kann es sich um bisher bekannte lineare, verzweigte oder cyclische Organopolysiloxane sowie Kohlenwasserstoff-Siloxan-Copolymere handeln, die durchschnittlich mehr als einen Silizium-Kohlenstoff (SiC)-gebundenen organischen Rest mit endständiger aliphatischer Kohlenstoff-Kohlenstoff-Doppelbindung aufweisen. Beispiele für die erfindungsgemäß eingesetzten Organopolysiloxane sind solche aus Einheiten der Formel R1SiOR2, wobei R gleich oder verschieden sein kann und aliphatisch gesättigte, gegebenenfalls substituierte SiC-gebundene Kohlenwasserstoffreste mit 1 bis 18 Kohlenstoffatomen bedeutet, R2 gleich oder verschieden sein kann und SiC-gebundene organische Reste mit endständiger aliphatischer Kohlenstoff-Kohlenstoff-Doppelbindung bedeuten. Zur Vernetzung werden Vernetzer vorzugsweise aus der Gruppe der Alkyl- bzw. Arylperoxide eingearbeitet. Beispiele für Alkylperoxide sind Dicumylperoxid, Di-tert.-butylperoxid und 2,5-Di-tert.-butylperoxy-2,5-di- methylhexan. Beispiele für Arylperoxide sind Benzoyl- peroxid, Bis(2.4-dichlorbenzoyl)peroxid und Bis(4-methyl- benzoy1)peroxid.

In einer bevorzugten Ausgestaltung besteht der Leiter aus Aluminium oder einer Aluminiumlegierung. Hierdurch ist das Kabel besonders kostengünstig herstellbar, insbesondere kostengünstiger als bei einem Leiter aus Kupfer. Durch die Trennlage wird dann vorteilhaft ein Anhaften des Silikonmantels am Aluminium-Leiter vermieden und dieser ist rückstandsfrei abisolierbar.

In einer geeigneten Ausgestaltung ist der Leiter ein Draht und hierbei insbesondere einstückig ausgeführt. In einer ebenfalls geeigneten Variante ist der Leiter dagegen ein Litzenleiter oder ein Seil und umfasst daher insbesondere mehrere Drähte, die insbesondere miteinander verseilt oder verdrillt sind. Die oben genannten Vorteile bezüglich der Trennlage gelten somit insbesondere für jegliche Ausgestaltungen eines Leiters. Insbesondere im Falle eines aus mehreren Drähten gefertigten Leiters ist dessen nach außen weisende Oberfläche üblicherweise größer und auch inhomogener, als die eines einstückigen Leiters, so dass eine Reduktion oder Vermeidung der Haftung ist in diesem Fall besonders vorteilhaft ist.

Das Kabel weist in einer ersten Variante lediglich einen Leiter auf, ist daher nach Art einer Ader aufgebaut, die aus einem mit einer Aderisolierung unmittelbar umgebenen, auch mehrdrähtigen Leiter besteht. Alternativ können jedoch auch mehrere einzelne Leiter von dem Silikonmantel umgeben sein, wobei mehrere Leiter gemeinsam, gruppenweise oder separat von einer oder auch mehreren Trennlagen getrennt sind, die jeweils die Leiter oder die Leitergruppen nach Art von Trennhüllen umgeben. Dadurch ist insbesondere ein mehradriges Kabel ausgebildet.

In bevorzugter Weiterbildung umfasst das das Kabel weiterhin mehrere Teilkabel, welche wiederum als ein- oder mehradrige Kabel mit einem Teilkabelmantel insbesondere ein Silikonmantel ausgebildet sind. Die mehreren Teilkabel sind zu einem Kabelverbund zusammengefasst, welcher einen gemeinsamen Silikonmantel als Kabelmantel aufweist. Die jeweiligen Teilkabel sind zum gemeinsamen Kabelmantel durch eine gemeinsame Trennlage und/oder zueinander durch individuelle Trennhüllen für ein jeweiliges Teilkabel getrennt und damit vorteilhaft separat auf besonders einfache Weise abisolierbar.

Zur Herstellung des Kabels wird allgemein der elektrische Leiter, beispielsweise ein Litzenleiter oder ein Seil gegebenenfalls auch ein massiver Draht, von der Trennlage aus dem Silikon-Werkstoff umgeben, so dass diese Trennlage unmittelbar an dem Leiter anliegt. Der Silikonmantel wird ergänzend unmittelbar über der Trennlage aufgebracht, das heißt diese umgebend, und geht mit dieser insbesondere eine stoffschlüssige Verbindung ein. Die Trennlage ist dann räumlich zwischen dem Leiter und dem Silikonmantel aufgebracht.

Bei einer ersten geeigneten Ausführungsvariante wird hierbei zunächst die Trennlage in einem Extrusionsprozess aufgebracht und ist somit ebenfalls um den Leiter herum angeordnet, nach Art eines ersten, inneren Silikonmantels. Dieses vorbereitete Halbzeug wird anschließend mit dem eigentlichen Silikonmantel versehen, der nun ein zweiter, äußerer Silikonmantel ist. Insbesondere verbinden sich die beiden Silikonmäntel dann zum gemeinsamen Silikonmantel, der nun vorteilhaft rückstandslos vom Leiter entfernbar ist.

Alternativ werden beide Silikonmäntel, also sowohl die Trennlage, in Form eines inneren Silikonmantels, als auch der äußere Silikonmantel in einem gemeinsamen Ko-Extrusionsprozess erzeugt. Aufgrund der ähnlichen Materialien der beiden Silikonmäntel ist eine solche Koextrusion besonders einfach durchführbar. Dies führt zu einem besonders kompakten Herstellungsverfahren, insbesondere hinsichtlich der benötigten Werkzeuge und Prozessschritte.

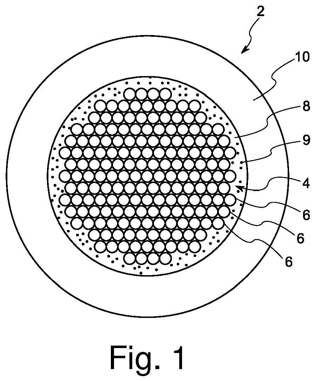

Nachfolgend wird ein Ausführungsbeispiel anhand einer Zeichnung näher erläutert. Die einzige Fig. 1 zeigt hierbei ein Kabel im Querschnitt.

Im dargestellten Ausführungsbeispiel ist im Kabel 2 ein insbesondere zentraler Leiter 4 als ein Litzenleiter oder Seil ausgebildet und umfasst eine Vielzahl von einzelnen Drähten 6, die vorzugsweise alle aus Aluminium oder einer Aluminiumlegierung bestehen. Diese sind von einer nicht haftenden Trennlage 8 aus einem Silikon-Werkstoff umgeben, der hier ein Silikon mit beigemischtem Füllstoff 9 ist. Als Füllstoff 9 ist insbesondere eine pyrogene Kieselsäure vorgesehen. Schließlich ist die Trennlage 8 von einem Silikonmantel 10 umgeben. Letzterer weist hier in radialer Richtung eine deutlich größere Wandstärke als die Trennlage 8 auf. Im Kabel bilden die Trennlage 8 und der Silikonmantel 10 als innerer beziehungsweise äußerer Silikonmantel einen gemeinsamen Silikonmantel 10 des Kabels 2 aus.

Der in dem Ausführungsbeispiel verwendete Füllstoff 9 ist eine sogenannte pyrogene Kieselsäure, welche beispielsweise eine Dichte von etwa 2,2 g/cm³ aufweist. Allgemein liegt der Anteil der Füllstoffe 9 im Silikon-Werkstoff im Bereich zwischen 20 und 70%, insbesondere im Bereich zwischen 30 und 60 Gew.%.

### Bezugszeichenliste

- 2: Kabel
- 4: (elektrischer) Leiter
- 6: Draht
- 8: Trennlage
- 9: Füllstoff
- 10: Silikonmantel

## Patentansprüche

1. Kabel (2) mit einem elektrischen Leiter (4), mit einem diesen umgebenden Silikonmantel (10) und mit einer Trennlage (8), die zwischen dem Leiter (4) und dem Silikonmantel (10) angeordnet ist, wobei
- die Trennlage (8) aus einem Silikon-Werkstoff gefertigt ist, welcher im Vergleich mit dem Material des Silikonmantels (10) eine geringere Haftung zum Leiter (4) aufweist
- dem Silikon-Werkstoff hierfür zumindest ein Füllstoff (9) beigemischt ist,
- der Füllstoff (9) ein mineralischer Stoff ist,
- für den Silikonmantel (10) und für den Silikon-Werkstoff das gleiche Silikon verwendet wird, so dass sich der Silikonmantel (10) und die Trennlage (8) lediglich durch den Füllstoff (9) unterscheiden.

2. Kabel (2) nach dem vorhergehenden Anspruch,
**dadurch gekennzeichnet,**
**dass** die Trennlage (8) mit dem Silikonmantel (10) stoffschlüssig verbunden ist.

3. Kabel (2) nach einem der vorhergehenden Ansprüche,
**dadurch gekennzeichnet,**
**dass** der Silikon-Werkstoff im Vergleich zum Silikonmantel (10) eine höhere Dichte aufweist.

4. Kabel (2) nach einem der vorhergehenden Ansprüche,
**dadurch gekennzeichnet,**
**dass** der Silikon-Werkstoff eine Dichte im Bereich von etwa 1,5 - 1,8 g/cm³ aufweist.

5. Kabel (2) nach einem der vorhergehenden Ansprüche,
**dadurch gekennzeichnet,**
**dass** der Füllstoff (9) Siliziumdioxid oder Kieselsäure aufweist.

6. Kabel (2) nach einem der vorhergehenden Ansprüche ,
**dadurch gekennzeichnet,**
**dass** der Anteil des Füllstoffes (9) am Silikon-Werkstoff wenigstens 10 Gew.% beträgt und höchstens 70 Gew.% und vorzugsweise wenigstens 30 Gew.% und höchstens 60 Gew.% beträgt.

7. Kabel (2) nach einem der vorhergehenden Ansprüche,
**dadurch gekennzeichnet,**
**dass** der Silikon-Werkstoff und / oder der Silikonmantel ein Silikon auf Basis von Diorgano(poly)siloxanen aufweist.

8. Kabel (2) nach einem der vorhergehenden Ansprüche,
**dadurch gekennzeichnet,**
**dass** der Leiter (4) aus Aluminium oder einer Aluminiumlegierung besteht.

9. Kabel (2) nach einem der vorhergehenden Ansprüche,
**dadurch gekennzeichnet,**
**dass** der Leiter (4) ein Litzenleiter ist.

10. Kabel (2) mit einem elektrischen Leiter (4), mit einem diesen umgebenden Silikonmantel (10) und mit einer Trennlage (8), die zwischen dem Leiter (4) und dem Silikonmantel (10) angeordnet ist, wobei
- die Trennlage (8) aus einem Silikon-Werkstoff gefertigt ist, welcher im Vergleich mit dem Material des Silikonmantels (10) eine geringere Haftung zum Leiter (4) aufweist,
- dem Silikon-Werkstoff hierfür zumindest ein Füllstoff (9) beigemischt ist,
- als Füllstoff (9) entweder Siliziumdioxid oder Kieselsäure verwendet ist mit einem Anteil am Silikon-Werkstoff im Bereich von 30 Gew.% und höchstens 60 Gew.%,
- für den Silikon-Werkstoff und für den der Silikonmantel ein gleiches heißvulkanisiertes Silikon auf Basis von Diorgano(poly)siloxanen verwendet ist, so dass sich der Silikonmantel (10) und die Trennlage (8) lediglich durch den Füllstoff (9) unterscheiden.

11. Verfahren zum Herstellen eines Kabels (2) nach einem der vorhergehenden Ansprüche,
**dadurch gekennzeichnet,**
**dass** zwischen dem Leiter (4) und dem Silikonmantel (10) eine Trennlage (8) aus einem Silikon-Werkstoff aufgebracht wird.

12. Verfahren nach dem vorhergehenden Anspruch,
**dadurch gekennzeichnet,**
**dass** die Trennlage (8) in einem Extrusionsprozess aufgetragen wird.

13. Verfahren nach einem der beiden vorhergehenden Ansprüche,
**dadurch gekennzeichnet,**
**dass** die Trennlage (8) zusammen mit dem Silikonmantel (10) koextrudiert wird.

## Claims

1. A cable (2) comprising an electrical conductor (4), comprising a silicone sheath (10) surrounding the conductor and comprising a separation layer (8) arranged between the conductor (4) and the silicone sheath (10), where
- the separation layer (8) is made of a silicone material that has a lower adhesion to the conductor (4) than the material of the silicone sheath (10),
- at least one filler (9) is added to the silicone material for this,
- the filler (9) is a mineral substance,
- the same silicone is used for the silicone sheath (10) and for the silicone material so that the silicone sheath (10) and the separation layer (8) differ only by the filler (9).

2. The cable (2) according to the preceding claim, wherein the separation layer (8) is integrally joined to the silicone sheath (10).

3. The cable (2) according to either of the preceding claims, wherein the silicone material has a higher density than the silicone sheath (10).

4. The cable (2) according to one of the preceding claims, wherein the silicone material has a density in the range from approximately 1.5-1.8 g/cm³.

5. The cable (2) according to one of the preceding claims, wherein the filler (9) has silicon dioxide or silicic acid.

6. The cable (2) according to one of the preceding claims, wherein the proportion of the filler (9) in the silicone material is a minimum of 10 percent by weight and a maximum of 70 percent by weight and preferably a minimum of 30 percent by weight and a maximum of 60 percent by weight.

7. The cable (2) according to one of the preceding claims, wherein the silicone material and/or the silicone sheath has a silicone based on diorgano(poly)siloxanes.

8. The cable (2) according to one of the preceding claims, wherein the conductor (4) is made of aluminum or an aluminum alloy.

9. The cable (2) according to one of the preceding claims, wherein the conductor (4) is a stranded conductor.

10. A cable (2) comprising an electrical conductor (4), comprising a silicone sheath (10) surrounding the conductor and comprising a separation layer (8) arranged between the conductor (4) and the silicone sheath (10), where
- the separation layer (8) is made of a silicone material that has a lower adhesion to the conductor (4) than the material of the silicone sheath (10),
- at least one filler (9) is added to the silicone material for this,
- either silicon dioxide or silicic acid is used as filler (9) with a proportion in the silicone material in the range from 30 percent by weight to a maximum of 60 percent by weight,
- an identical heat curing silicone based on diorgano(poly)siloxanes is used for the silicone material and for the silicone sheath so that the silicone sheath (10) and the separation layer (8) differ only by the filler (9)

11. A method for manufacturing a cable (2) according to one of the preceding claims, wherein a separation layer (8) made of a silicone material is applied between the conductor (4) and the silicone sheath (10).

12. The method according to the preceding claim, wherein the separation layer (8) is applied in an extrusion process.

13. The method according to either of the two preceding claims, wherein the separation layer (8) is co-extruded together with the silicone sheath (10).

## Revendications

1. Câble (2) muni d'un conducteur électrique (4), comprenant une gaine en silicone (10) qui entoure celui-ci et comprenant une couche de séparation (8) qui est disposée entre le conducteur (4) et la gaine en silicone (10),
- la couche de séparation (8) étant fabriquée dans un matériau à base de silicone qui présente une adhérence au conducteur (4) plus faible que celle du matériau de la gaine en silicone (10)
- au moins une matière de charge (9) étant mélangée à cet effet au matériau à base de silicone,
- la matière de charge (9) étant une substance minérale,
- le même silicone étant utilisé pour la gaine en silicone (10) et le matériau à base de silicone, de sorte que la gaine en silicone (10) et la couche de séparation (8) se différentient uniquement par la matière de charge (9).

2. Câble (2) selon la revendication précédente, **caractérisé en ce que** la couche de séparation (8) est reliée par fusions de matières avec la gaine en silicone (10).

3. Câble (2) selon l'une des revendications précédentes, **caractérisé en ce que** le matériau à base de silicone présente une densité supérieure à celle de la gaine en silicone (10).

4. Câble (2) selon l'une des revendications précédentes, **caractérisé en ce que** le matériau à base de silicone présente une densité dans la plage d'environ 1,5 à 1,8 g/cm³.

5. Câble (2) selon l'une des revendications précédentes, **caractérisé en ce que** la matière de charge (9) comporte du dioxyde de silicium ou de l'acide silicique.

6. Câble (2) selon l'une des revendications précédentes, **caractérisé en ce que** la part de matière de charge (9) dans le matériau à base de silicone est égale au moins à 10 % massiques et au plus à 70 % massiques, et de préférence égale au moins à 30 % massiques et au plus à 60 % massiques.

7. Câble (2) selon l'une des revendications précédentes, **caractérisé en ce que** le matériau à base de silicone et/ou la gaine en silicone présentent un silicone à base de diorgano(poly)siloxanes.

8. Câble (2) selon l'une des revendications précédentes, **caractérisé en ce que** le conducteur (4) se compose d'aluminium ou d'un alliage d'aliminium.

9. Câble (2) selon l'une des revendications précédentes, **caractérisé en ce que** le conducteur (4) est un conducteur multibrin.

10. Câble (2) muni d'un conducteur électrique (4), comprenant une gaine en silicone (10) qui entoure celui-ci et comprenant une couche de séparation (8) qui est disposée entre le conducteur (4) et la gaine en silicone (10),
- la couche de séparation (8) étant fabriquée dans un matériau à base de silicone qui présente une adhérence au conducteur (4) plus faible que celle du matériau de la gaine en silicone (10)
- au moins une matière de charge (9) étant mélangée à cet effet au matériau à base de silicone,
- la matière de charge (9) utilisée étant soit du dioxyde de silicium, soit de l'acide silicique dans la plage de 30 % massiques à un maximum de 60 % massiques,
- un même silicone à base de diorgano(poly)siloxanes vulcanisable à chaud étant utilisé pour le matériau à base de silicone et la gaine en silicone, de sorte que la gaine en silicone (10) et la couche de séparation (8) se différentient uniquement par la matière de charge (9).

11. Procédé de fabrication d'un câble (2) selon l'une des revendications précédentes, **caractérisé en ce qu'**une couche de séparation (8) en un matériau à base de silicone est disposée entre le conducteur (4) et la gaine en silicone (10).

12. Procédé selon la revendication précédente, **caractérisé en ce que** la couche de séparation (8) est appliquée au cours d'un processus d'extrusion.

13. Procédé selon l'une des deux revendications précédentes, **caractérisé en ce que** la couche de séparation (8) est coextrudée conjointement avec la gaine en silicone (10).
